# EUROPÄISCHE PATENTSCHRIFT

(11) **EP 1 915 278 B1**
(45) Veröffentlichungstag und Bekanntmachung des Hinweises auf die Patenterteilung: **29.02.2012**
(21) Anmeldenummer: 06819046.1
(22) Anmeldetag: 17.07.2006
(51) Int. Cl.: B60R 21/0132, B60R 21/00, B60R 21/01

(54) **VORRICHTUNG UND VERFAHREN ZUR SEITENAUFPRALLERKENNUNG IN EINEM FAHRZEUG**
DEVICE AND METHOD FOR SIDE IMPACT DETECTION
PROCEDE ET DISPOSITIF POUR DETECTER UN IMPACT LATERAL DANS UN VEHICULE

(30) Priorität: 12.08.2005 DE 102005038227
(43) Veröffentlichungstag der Anmeldung: 30.04.2008
(73) Patentinhaber: ROBERT BOSCH GMBH, 70442 Stuttgart (DE)
(72) Erfinder: LICH, Thomas, 71409 Schwaikheim (DE)
(86) Internationale Anmeldenummer: PCT/EP2006/064301
(87) Internationale Veröffentlichungsnummer: WO 2007/020145

(56) Entgegenhaltungen:
- EP-A2- 1 566 312
- EP-B1- 1 343 661
- WO-A-03/031236
- WO-A-2004/069603
- WO-A-2005/123462
- US-A1- 2004 182 627

## Beschreibung

### Stand der Technik

Die Erfindung betrifft eine Vorrichtung bzw. ein Verfahren zur Seitenaufprallerkennung in einem Fahrzeug nach der Gattung der unabhängigen Patentansprüche.

Aus EP 1343661 B1 ist es bekannt, einen Seitenaufprall mittel eines Temperatursensors zu erkennen. Der Temperatursensor als Seitenaufprallsensorik ist in einem Hohlraum eines Seitenteils angeordnet. Zur Plausibilisierung kann eine Beschleunigungssensorik verwendet werden oder auch eine Körperschallsensorik.

Aus WO 03/031236 A ist ein Verfahren zur Bestimmung einer Auslöseentscheidung für Rückhaltemittel in einem Fahrzeug beschrieben, bei dem in Abhängigkeit von einem Schwimmwinkel, einer Fahrzeugquergeschwiridigkeit und dem Fahrzeugkippwinkel eine Auslöseentscheidung bestimmt wird. Der Kippwinkel wird hier durch eine Fahrzeugquerbeschleunigung und einer Fahrzeugquergeschwindigkeit charakterisiert. Zusätzlich kann noch eine Insassenerkennung verwendet werden.

### Vorteile der Erfindung

Die erfindungsgemäße Vorrichtung zur Seitenaufprallerkennung in einem Fahrzeug bzw. das Verfahren zur Seitenaufprallerkennung in einem Fahrzeug mit den Markmalen der unabhängigen Patentansprüche haben dem gegenüber Vorteil. Es ist bekannt, dass die Plausibilitätssensorik fahrdynamische Größen als Plausibilisierungssignal erzeugt. Diese Größen sind bereits vor dem Kontakt vorhanden, sodass eine schnelle Plausibilisierung möglich ist, die eine schnelle Seitenaufprallsensorik in ihrer Leistungsfähigkeit nicht einschränkt. Die fahrdynamischen Daten sind der Betrag und die Richtung der Lateralgerschwindigkeit und/ oder der Schwimmwinkel, die vorzugsweise aus einer Fahrdynamikregelung bereitgestellt werden können. Das Steuergerät für die Fahrdynamikregelung ist demnach mit einem Steuergerät für Personenschutzmittel verbunden. Diese Verbindung kann vorzugsweise als CAN-Bus ausgelegt sein, es sind jedoch auch andere Verbindungen, wie auch eine Punkt-zu-Punkt-Verbindung möglich, um eine schnelle Übertragung dieser Daten zu gewährleisten.

Der Erfindung liegt der Gedanke zugrunde, dass die Verwendung der Lateralgeschwindigkeit und/ oder des Schwimmwinkels zur Plausibilisierung eines durch einen Kontaktsensor, beispielsweise eines Druck- und/ oder Beschleunigung- und/ oder Körperschall oder eines anderen physikalischen Prinzips detektierten Seitenaufpralls, schnell detektiert. Der Algorithmus zur Seitenaufprallerkennung wird dazu durch einen zusätzlichen Plausibilitätspfad erweitert, der als Eingabeinformation die Lateralgeschwindigkeit und dabei den Betrag und die Richtung und/ oder den Schwimmwinkel berücksichtigt.

Bei einem Seitenaufprall müssen im Bereich von 4 - 10 ms nach dem Aufprall die Entscheidungen zur Ansteuerung von Personenschutzmittel getroffen werden. Dies setzt dabei in der Regel ein Plausibilitätssignal durch entweder einen Beschleunigungssensor in der B- oder C-Säule oder durch eine Plausibilisierung durch das zentrale Airbagsteuergerät voraus, um hinsichtlich der Auslöseentscheidung robust gegenüber so genannten Misuse-Fällen, also Fehlauslösungen, zu sein. Die Seitenaufprallsensorik kann nämlich ein fehlerhaftes Signal liefern.

Durch die Verwendung der Lateralgeschwindigkeit hinsichtlich ihres Betrags und der Richtung kann mit der erfindungsgemäßen Vorrichtung bzw. Verfahren es erreicht werden, dass durch die vorangegangene Plausibilisierung im Falle eines seitlichen Abdriftens des Fahrzeugs, gefolgt durch den Aufprall, z. B. einem Pfahl oder einem Baum, eine verbesserte Auslöseperformance erreicht wird. Die Verbesserung liegt je nach Konfiguration im Bereich von 1,5 - 4 ms. Das ist prozentual gesehen eine Verbesserung von rund 40 - 50 %. Daher ist eine verbesserte Schutzwirkung hinsichtlich so genannter Pole- oder Pfahl-Crashs zu erwarten, da hier der Anteil von rund 17% liegt, bei dem das Fahrzeug seitlich gegen ein Objekt dieser Größe rutscht und es zu einer seitlichen Kollision kommt.

Durch die Verwendung der Lateralgeschwindigkeit und/oder des Schwimmwinkels ergibt sich ein Mehrnutzen, da bestehende Sensorik verwendet werden kann und somit keine bedeutenden zusätzlichen Kosten entstehen.

Es ist erfindungskennzeichnend, dass das Plausibilitätssignal für eine vorgegebene Zeit gehalten wird. Dies hat den Vorteil, dass wenn das Plausibilisierungssignal einen Schwellwert wieder unterschreitet, dass dies nicht sofort zu einem Rücksetzen von Variablen im Algorithmus führt und die Plausibilisierungsflagge damit für eine vorgegebene Zeitdauer gehalten wird. Ist diese Zeit abgelaufen, dann werden die entsprechenden Variablen im Algorithmus zurückgesetzt.

Es ist, erfindungsgemäß, dass, wenn der Betrag der Lateralgeschwindigkeit eine vorgegebene Schwelle überschreitet, ein Zähler gestartet wird, der selbst mit einer vorgegebenen Zeit verglichen wird. Dies ermöglicht eine Beurteilung, inwieweit das Plausibilisierungssignal relevant ist und ermöglicht auch eine Prädiktion des Verhaltens des Kraftfahrzeugs.

Weiterhin ist es von Vorteil, dass eine Flagge gesetzt wird, wenn das Signal der Seitenaufprallsensorik eine Rauschschwelle überschreitet. Dies zeigt an, dass damit das erfindungsgemäße Verfahren in Gang kommt, da es nun zu Signalen kommen kann, die einen Seitenaufprall anzeigen.

Durch die in den abhängigen Ansprüchen aufgeführten Maßnahmen und Weiterbildungen sind vorteilhafte Verbesserungen der in den unabhängigen Patentansprüchen abgegebenen Vorrichtung zur Seitenaufprallerkennung bzw. des Verfahrens zur Seitenaufprallerkennung in einem Fahrzeug möglich.

### Zeichnung

Ausführungsbeispiele der Erfindung sind in der Zeichnung dargestellt und werden in der nachfolgenden Beschreibung näher erläutert.

Es zeigen:
- Figur 1: ein Blockschaltbild der erfindungsgemäßen Vorrichtung,
- Figur 2: ein Blockschaltbild des erfindungsgemäßen Verfahrens,
- Figur 3: ein weiteres Blockschaltbild des erfindungsgemäßen Verfahrens und
- Figur 4: ein Flussdiagramms des erfindungsgemäßen Verfahrens.

### Beschreibung

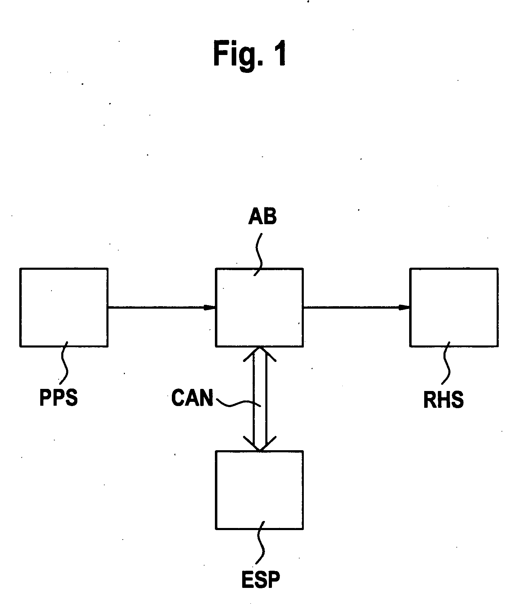

Figur 1 erläutert in einem Blockschaltbild die erfindungsgemäße Vorrichtung. Eine Seitenaufprallsensorik PPS ist über eine Leitung an ein Airbagsteuergerät AB angeschlossen. Bei der Seitenaufprallsensorik PPS handelt es sich hier um eine Drucksensorik, die in einem Seitenteil eines Kraftfahrzeugs angeordnet ist und dort über einen adiabatischen Druckanstieg einen Seitenaufprall registriert. Diese Sensorik ist sehr schnell und ist daher äußerst leistungsfähig. Alternativ ist es möglich, eine Beschleunigungssensorik zu verwenden, die in den Seitenteilen des Kraftfahrzeugs angeordnet ist. Dazu zählen beispielsweise die A-, B- oder C-Säule, die Türe, der Türschweller, Querträger und andere geeignete Einbauorte. Auch eine Temperatursensorik, die einen Temperaturanstieg in einem Hohlraum registriert, wenn ein Seitenaufprall auftritt, kann hier verwendet werden. Auch eine Körperschallsensorik, die besonders frühzeitig einen Aufprall registrieren. kann, ist hier möglich. Auch eine Umfeldsensorik kann hier vorgesehen sein.

Die Verbindung der Seitenaufprallsensorik PPS zum Airbagsteuergerät AB ist vorliegend eine Punkt-zu-Punkt-Verbindung, die unidirektional ausgebildet ist, wobei das Airbagsteuergerät durch Impulse mehrere Drucksensoren, die in einer Art Quasi-Bus geschaltet sind, zu einer vorgegebenen Übertragung von Sensorwerten anregt. Es ist auch eine Sensorbustechnik möglich, Funkbus oder optische Übertragung sind ebenfalls möglich. Das Airbagsteuergerät weist selbst einen Prozessor, einen Speicher, Schnittstellenbausteine und Zündkreisansteuerungen sowie Plausibilitätssensoren auf und verarbeitet die Signale der Seitenaufprallsensorik PPS mit diesen Komponenten. Findet der Auslösealgorithmus, der auf dem Prozessor im Airbagsteuergerät läuft, einen Seitenaufprall, dann werden die Personenschutzmittel RHS, an die das Airbagsteuergerät über einen Ausgang angeschlossen ist, angesteuert. Zu diesen Personenschutzmittel RHS gehören Airbags, Gurtstraffer, Überrollbügel, Seitenwangen und/oder Kopfstützen. Die Ansteuerung durch das Airbagsteuergerät AB erfolgt jedoch nur, wenn auch ein Plausibilisierungssignal vorliegt. Dieses Plausibilisierungssignal ist erfindungsgemäß der Betrag und die Richtung der Lateralgeschwindigkeit im Fahrzeug, also der Fahrzeugquergeschwindigkeit, und/ oder der Schwimmwinkel. Diese Daten liefert das Steuergerät für die Fahrdynamikregelung ESP. Es ist möglich, dass diese Daten in einer Sensorbox ermittelt werden, an die das Airbagsteuergerät AB angeschlossen ist. Es ist auch möglich, dass das Steuergerät AB und das Steuergerät für die Fahrdynamikregelung ESP miteinander in einem Steuergerät verschmolzen sind. Ebenso werden auch andere Sensorsignale, wie eine Innenraumsensorik, bei der Ansteuerung der Personenschutzmittel RHS verwendet. Dazu gehören z. B. Kraftmessbolzen, die am Fahrzeugsitz befestigt sind und das Gewicht sowie die Gewichtsverteilung ermitteln können. Die Verbindung zwischen dem Airbagsteuergerät AB und dem Steuergerät für die Fahrdynamikregelung ESP ist hier als eine CAN-Busverbindung ausgebildet. An dieser CAN-Busverbindung können mehrere Teilnehmer angeschlossen sein, es kann aber aus Sicherheitsgründen hier vorgesehen sein, dass nur eine Punkt-zu-Punkt-Verbindung vorgesehen ist. Auch andere sichere Datenübertragungsverbindungen zwischen dem Steuergerät AB und dem Steuergerät ESP sind hier möglich.

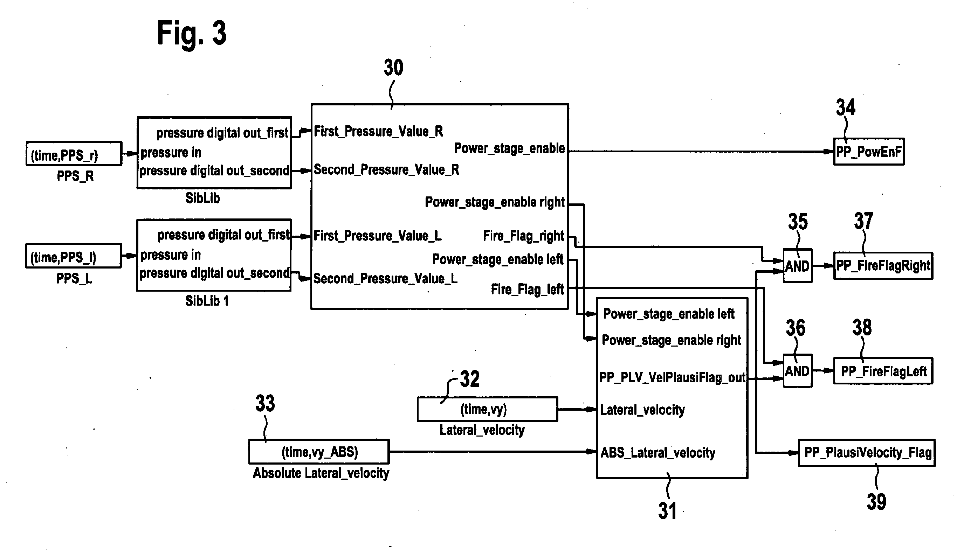

Figur 3 zeigt in einem Blockschaltbild eine Realisierung des erfindungsgemäßen Verfahrens. In den oberen Blöcken, beispielsweise durch den Block 30 repräsentiert, ist der Auslösealgorithmus für das Drucksignal dargestellt. Der Auslösealgorithmus 30 erhält als Eingangsdaten die Drucksensorsignale der rechten und linken Seite, hier dargestellt durch PPS_R und PPS_L. Diese werden in den Baustein SibLib und SibLib1 digitalisiert, gefiltert, verstärkt und zum Algorithmus 30 übertragen. Der Algorithmus läuft üblicherweise im Airbagsteuergerät AB dort auf dem Prozessor, das meist zentral angeordnet ist. Es ist jedoch möglich, auch andere Einbauorte für das Airbagsteuergerät AB vorzusehen. Im Block 31 ist die Plausibilisierung implementiert. Die Lateralgeschwindigkeit 32 geht als Eingangswert in den Block 31 und auch die absolute Lateralgeschwindigkeit, die vom Steuergerät ESP erzeugt wird. Die Plausibilisierung 31 erhält vom Algorithmus 30 so genannte Enable-Signale, ob die Leistungsstufe links und rechts aktiviert wird, als Folge der Auswertung der Drucksignale.

Der Betrag der Lateralgeschwindigkeit, der hier im Block 33 erzeugt wird, kann optional auch innerhalb der Bearbeitung 31 erfolgen, muss nicht notwendigerweise als Zusatzeingang vorgesehen sein. Eine weitere Option ist die Verwendung des Schwimmwinkels und/ oder einer Kombination des Schwimmwinkels und der Lateralgeschwindigkeit.

Durch die Blöcke 35 - 39 ist eine Logikschaltung repräsentiert. Aus dem Druckalgorithmus 30 werden die Vorbereitungsflaggen Power_stage_enable_left und Power_stage_enable_right zum Block 31 übertragen. Innerhalb des Druckalgorithmus sind diese Flaggen sowohl für die linke als auch für die rechte Seite bereitgestellt. Diese Trennung ist Bestandteil des Druckalgorithmus. Im Weiteren wird die Feuerflagge Fire_flag_right, Fire_flag_left aus dem Druckalgorithmus 30 den UND-Gattern 35 und 36 jeweils zugeführt. Diese Feuerentscheidung oder Auslöseentscheidung des Druckalgorithmus wird nun erfindungsgemäß mit Hilfe der Lateralgeschwindigkeit, und zwar über den Betrag und die Richtung, plausibilisiert. Diese Flagge kommt aus dem Block 31 als Resultat heraus und wird demnach an die zweiten Eingänge der UND-Gatter 35 und 36 angeschlossen. Somit ist klar, dass nur wenn die Feuerflagge und die Plausibilisierungsflagge gesetzt sind, die UND-Gatter 35 und 36 eine plausibilisierte Auslöseentscheidung 37 oder 38 ausgeben. Diese Flagge wird dann direkt den Zündkreisen zugeführt. Die Flaggen 34 gehen zu den Leistungsendstufen und auch die Flagge 39 zu den Zündkreisendstufen.

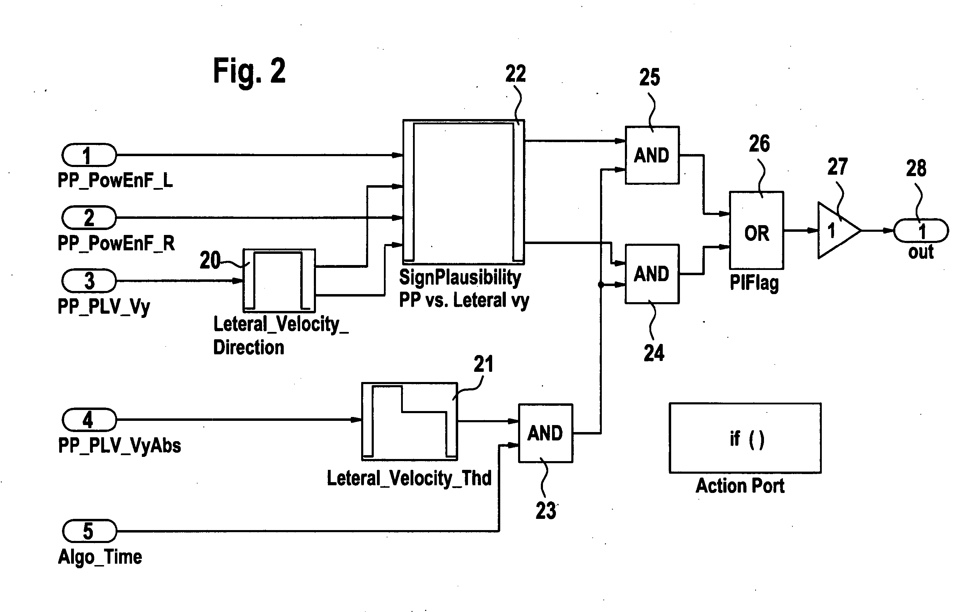

In Figur 2 ist der Plausibilisierungsblock nochmals detailliert herausgestellt worden. Die Eingabeinformation 1 und 2 sind die Vorbereitungsflaggen des Druckalgorithmus, die in den Block 22 geführt werden. Diese Vorbereitungsflaggen werden gesendet, wenn eine Rauschschwelle überschritten ist und damit den Druckalgorithmus für einen möglichen Seitenaufprall sensibilisiert. Darüber hinaus wird über die Flagge 3, die in dem Block 20 geführt wird, die Richtung der Lateralgeschwindigkeit bestimmt und geht in den Block 22 ein. Über die Eingabe 4 wird der Absolutwert der Lateralgeschwindigkeit einem Schwellwertentscheider 21 zugeführt. Dieser Schwellwertentscheider 21 kann auch zeitabhängig konfiguriert sein, d. h. der Schwellwert ist nicht über alle Zeiten gleich, sondern verändert sich im Ablauf der Zeit. Über die Eingabe 5 wird eine Zeitflagge gesetzt, die aktiviert wird, wenn der Betrag der Lateralgeschwindigkeit eine erste Schwelle überschreitet. Dann wird von einem vorgegebenen Startwert ein Zähler aus inkrementiert. Im Block 20 findet zunächst die Vorzeichenextraktion statt, die zum Ziel hat, die Richtung eines Schleudervorgangs zu ermitteln. Die Vorzeichen werden in einem weiteren Verarbeitungsschritt, und zwar im Block 22, mit den Flaggen aus dem Druckatgorithmus, das sind die Vorbereitungsflaggen, verglichen. Die hier dargestellten Flaggen sind aus dem Algorithmus zur Auswertung der Signale der Drucksensoren vorgesehen, es können aber auch andere Sensoren, z. B. Beschleunigungs- oder Körperschallsensoren verwendet werden. Im Block 22 werden demnach die Vorzeichen aus dem Druckalgorithmus und dem Plausibilisierungspfad verglichen. Diese Überprüfung der Vorzeichen bedeutet, dass ein Driften, gekennzeichnet beispielsweise durch ein negatives Vorzeichen, verglichen wird mit einer Vorbereitungsflagge links, was darauf hindeutet, dass ein möglicher Aufprall auf der linken Seite des Fahrzeugs stattfindet. D. h. ein Schleudern nach links mit einer möglichen Auslösung der Personenschutzmittel von links wird als plausibel anerkannt, während ein Driften nach links mit möglicher Auslösung von rechts eher unplausibel ist. Das Ergebnis dieser Verarbeitung ist eine Flagge, die anzeigt, ob diese Abfrage korrekt oder inkorrekt ist. Dies wird durch die Ausgabe 28 angegeben. Parallel wird der Betrags der lateralen Geschwindigkeit gegenüber einer zweiten einstellbaren Schwell verglichen. Dies geschieht im Block 21. Der zweite Einstellparameter ist in der Regel größer als der erste Schwellwert und kennzeichnet ein Maß, ab dem das Personenschutzmittel bei einer seitlichen Bewegung nach einem Aufprall als plausibel gekennzeichnet wird oder nicht. Ist die aktuelle Geschwindigkeit größer als dieser Schwellwent, ergibt sich das Ergebnis zu einer logischen 1 und wird zusätzlich mit der dahinter geschalteten Logik 23, 24, 26 und 27 sowie 25 mit der Richtungsinformation verknüpft. Dieser Block lässt sich als eine gesamte Logikschaltung zusammenfassen, welche als Ergebnis eine weitere Flagge liefert, die die Geschwindigkeit sowie die Richtung plausibilisiert. Danach erfolgt die eigentliche Verknüpfung mit der Auslöseentscheidung des Druck- oder Beschleunigungsalgorithmus zur Ansteuerung der Personenschutzmittel, wie in Figur 3 dargestellt.

In einer weiteren möglichen Ausführung kann die Logik dahingehend erweitert werden, dass der Schwimmwinkel als Einzel- oder als Betragsgröße gegenüber einem dritten einstellbaren Schwellwert verglichen wird. Bei einem Schwimmwinkel von rund 90°, also einem rein seitlichen Driften des Fahrzeugs erfolgt der Aufprall in einem stumpfen Winkel, sodass hier die Auslösung auf alle Fälle gerechtfertigt ist. Bei einem Schwimmwinkel von rund 10°, also eher spitz, kann über eine Parametrisierung eine Auslösung verhindert werden, sodass keine zusätzlichen Misuse-Fälle auftreten. Die Auswertung geschieht durch eine Erweiterung der UND-Verknüpfung innerhalb der in Figur 3 dargestellten Logikschaltung.

Damit die Plausibilitätsentscheidung nach Unterschreiten des Schwellwerts nicht zu einem sofortigen Rücksetzen von Zähler und Flaggen führt, wird die Flagge nochmals gesondert in einem parametrisierbaren Filter für eine Zeitdauer, die vorgegeben ist, gehalten. Erst nach dem Rücksetzen des Filters werden ebenfalls der Zähler sowie die Plausibilisienungsflagge zurückgesetzt.

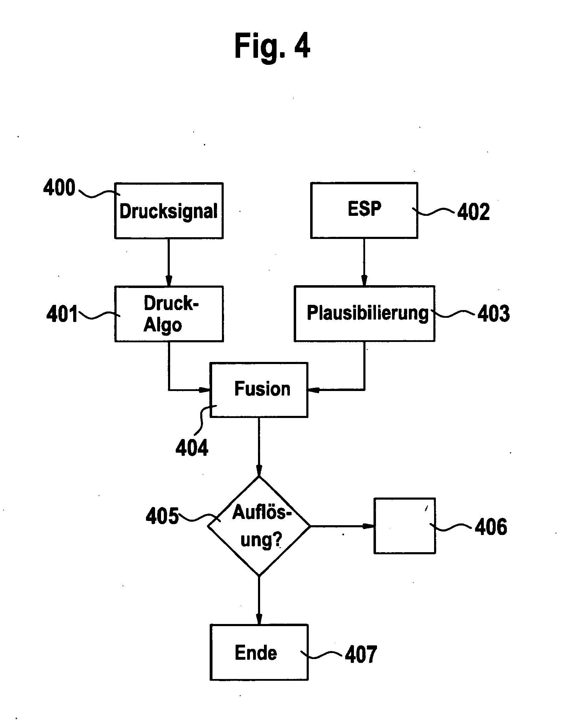

Im Flussdiagramm gemäß Figur 4 wird das erfindungsgemäße Verfahren noch einmal erläutert. Verfahrensschritt 402 liefert das Steuergerät ESP, die Fahrdynamikdaten Lateralgeschwindigkeit und/ oder Schwimmwinkel. In Verfahrensschritt 403 wird, wie oben dargestellt, aus der Lateralgeschwindigkeit der Betrag und die Richtung extrahiert und mit Daten aus dem Druckalgorithmus verglichen, um die Plausibilisierung herzustellen. In Verfahrensschritt 400 wird das Drucksignal durch den Drucksensor erzeugt und geht in den Druckalgorithmus 401 ein. In Verfahrensschritt 404 kommt es dann zur Fusion der Plausibilisierung mit der Auslöseentscheidung. In Verfahrensschritt 405 wird abgefragt, ob die Auslösung erfolgen soll. Ist das der Fall, wird in Verfahrensschritt 406 die entsprechenden Personenschutzmittel angesteuert. Ist das nicht der Fall, dann endet in Verfahrensschritt 407 das erfindungsgemäße Verfahren.

## Patentansprüche

1. Vorrichtung zur Seitenaufprallerkennung in einem Fahrzeug mit
- einer Seitenaufprallsensorik (PPS), die ein erstes Signal erzeugt
- einer Plausibilitätssensorik (ESP), die Richtung und einen Betrag einer Lateralgeschwindigkeit des Fahrzeugs und/ oder einen Schwimmwinkel des Fahrzeugs als Plausibilisierungssignal bestimmt
- einem Prozessor, der in Abhängigkeit von dem ersten Signal und dem Plausibilisierungssignal den Seitenaufprall erkennt; **dadurch gekennzeichnet, dass** das Plausibilisierungssignal für eine vorgegebene Zeit gehalten wird, dass, wenn der Betrag der Lateralgeschwindigkeit eine vorgegebene Schwelle überschreitet, ein Zähler gestartet wird, wobei der Zähler mit der vorgegebenen Zeit vergleichen wird.

2. Vorrichtung nach Anspruch 1, **dadurch gekennzeichnet, dass** die Plausibilisierungssensorik (ESP) über einen CAN-Bus (CAN) mit dem Prozessor verbindbar ist.

3. Verfahren zur Seitenaufprallerkennung mit folgenden Schritten:
- Erzeugen eines ersten Signals durch eine Seitenaufprallsensorik (PPS)
- Bestimmung einer Richtung und eines Betrags einer Lateralgeschwindigkeit eines Fahrzeugs und/oder eines Schwimmwinkels als ein Plausibilisierungssignal des Fahrzeugs
- Erkennen des Seitenaufpralls anhand des ersten Signals und des Plausibilisierungssignals; **dadurch gekennzeichnet, dass** das Plausibilisierungssignal für eine vorgegebene Zeit gehalten wird, dass, wenn der Betrag der Lateralgeschwindigkeit eine vorgegebene Schwelle überschreitet, ein Zähler gestartet wird, wobei der Zähler mit der vorgegebenen Zeit verglichen wird.

4. Verfahren nach Anspruch 3, **dadurch gekennzeichnet, dass** eine Flagge gesetzt wird, wenn das erste Signal eine Rauschschwelle überschreitet.

## Claims

1. Device for side impact detection of a vehicle, having
- a side impact sensor system (PPS) which generates a first signal,
- a plausibility checking sensor system (ESP) which determines the direction and absolute value of a lateral speed of the vehicle and/or an attitude angle of the vehicle as a plausibility checking signal,
- a processor which detects the side impact as a function of the first signal and the plausibility checking signal; **characterized in that** the plausibility checking signal is held for a predefined time, **in that** when the absolute value of the lateral speed exceeds a predefined threshold a counter is started wherein the counter is compared with the predefined time.

2. Device according to Claim 1, **characterized in that** the plausibility checking sensor system (ESP) can be connected to the processor via a CAN bus (CAN).

3. Method for side impact detection having the following steps:
- generation of a first signal by a side impact sensor system (PPS)
- determination of a direction and an absolute value of a lateral speed of a vehicle and/or an attitude angle as a plausibility checking signal of the vehicle
- detection of the side impact on the basis of the first signal and the plausibility checking signal; **characterized in that** the plausibility checking signal is held for a predefined time, **in that** when the absolute value of the lateral speed exceeds a predefined threshold, a counter is started wherein the counter is compared with the predefined time.

4. Method according to Claim 3, **characterized in that** a flag is set if the first signal exceeds a noise threshold.

## Revendications

1. Dispositif de détection de collision latérale dans un véhicule comprenant
- un détecteur de collision latérale (PPS) qui génère un premier signal
- un détecteur de plausibilité (ESP) qui détermine la direction et une valeur d'une vitesse latérale du véhicule et/ou un angle de flottement du véhicule en tant que signal de définition de plausibilité,
- un processeur qui, en fonction du premier signal et du signal de définition de plausibilité, détecte la collision latérale ; **caractérisé en ce que** le signal de définition de plausibilité est maintenu pendant une durée prédéfinie, **en ce qu'**un compteur est démarré lorsque la valeur de la vitesse latérale devient supérieure à un seuil prédéfini, le compteur étant comparé avec la durée prédéfinie.

2. Dispositif selon la revendication 1, **caractérisé en ce que** le détecteur de plausibilité (ESP) peut être relié au processeur par le biais d'un bus CAN (CAN).

3. Procédé de détection de collision latérale comprenant les étapes suivantes .
- génération d'un premier signal par un détecteur de collision latérale (PPS)
- détermination d'une direction et d'une valeur d'une vitesse latérale d'un véhicule et/ou d'un angle de flottement en tant que signal de définition de plausibilité,
- détection de la collision latérale au moyen du premier signal et du signal de définition de plausibilité ; **caractérisé en ce que** le signal de définition de plausibilité est maintenu pendant une durée prédéfinie, **en ce qu'**un compteur est démarré lorsque la valeur de la vitesse latérale devient supérieure à un seuil prédéfini, le compteur étant comparé avec la durée prédéfinie.

4. Procédé selon la revendication 3, **caractérisé en ce qu'**un marqueur est activé lorsque le premier signal devient supérieur à un seul de bruit.
